# EUROPÄISCHE PATENTSCHRIFT

(11) **EP 1 085 347 B1**
(45) Veröffentlichungstag und Bekanntmachung des Hinweises auf die Patenterteilung: **05.11.2008**
(21) Anmeldenummer: 00117547.0
(22) Anmeldetag: 14.08.2000
(51) Int. Cl.: G01V 1/147

(54) **Vorrichtung und Verfahren zur Erzeugung seismischer Schwingungen**
Apparatus and method for generating seismic vibrations
Dispositif et procédé pour générer des vibrations sismiques

(30) Priorität: 14.09.1999 DE 19944032
(43) Veröffentlichungstag der Anmeldung: 21.03.2001
(73) Patentinhaber: Geoforschungszentrum Potsdam, 14473 Postdam (DE)
(72) Erfinder: Borm, Günter, 76227 Karlsruhe (DE); Giese. Rüdiger, 14715 Schmetzdorf (DE); Otto, Peter, 14471 Potsdam (DE); Selke, Christian, 14624 Dallgow (DE)
(74) Vertreter: Hertz, Oliver

(56) Entgegenhaltungen:
- EP-A- 0 333 363
- DE-A- 2 749 945
- US-A- 3 194 207
- US-A- 3 283 844
- US-A- 4 991 685

## Beschreibung

Die Erfindung betrifft eine Vorrichtung zur Erzeugung mechanischer Schwingungen in festen Körpern, insbesondere eine Vorrichtung zur Erzeugung von seismischen Wellen oder Schallwellen in der Erdkruste oder in Bauwerken, wie z.B. einen Schwingungsgenerator für seismische Untersuchungen, und ein Verfahren zur Erzeugung mechanischer Schwingungen unter Verwendung einer derartigen Vorrichtung.

Zur Erzeugung seismischer Wellen in der Erdkruste für Forschungs- und Erkundungsaufgaben sind verschiedene Techniken allgemein bekannt. So werden z.B. von Miller et al. in "Geophysics" (Bd. 57, Nr. 5, S. 393 ff) Verfahren zur Erzeugung der Schwingungsenergie und deren Ankopplung an den Boden beschrieben. Eine weitere Übersicht zur Technik der Schwingungserzeugung wird in DE 23 34 996 gegeben. Aus DE 22 02 289 ist zur Erzeugung impulsartiger Anregungen bekannt, Schallwellen durch Implosionen zu erzeugen. Aus DE 19 50 91 22 ist ein hydraulisches Impulsgerät zur Schwingungserzeugung bekannt. Eine weitere Form der Schwingungserzeugung, nämlich durch Auslösung seismischer Gasexplosionen, wird in DE 19 53 924 beschrieben. Ein genereller Nachteil von all diesen bekannten Techniken ist die beschränkte Einstellbarkeit und Reproduzierbarkeit der Impulsparameter. Wenn jedoch insbesondere der zeitliche Verlauf und die Energie der erzeugten seismischen Schwingungen nur ungenau oder gar nicht bekannt sind, so wird auch die Genauigkeit der Auswertung von Schwingungsmessungen eingeschränkt.

Es sind auch mechanische Impulserzeuger bekannt, bei denen beispielsweise Scherwellen an der Erdoberfläche durch einen Hammerschlag (DE 20 58 305) oder seismische Wellen in einem Gebirgsgestein durch einen Impulsgeber in einem Bohrmeißel, mit dem die Impulsanregung während des Bohrerstillstandes ausgelöst wird (DE 19 50 85 74), erzeugt werden. Allerdings ist es auch bei diesen Geräten nicht möglich, seismische Schwingungen oder Schallschwingungen mit einer Reproduzierbarkeit zu erzeugen, die den Anforderungen beispielsweise bei seismischen Untersuchungen im Tunnelbau genügt.

Es ist auch bekannt, auf Fahrzeugen (z.B. LKW) vertikal bewegliche Massen zur Erzeugung von Schlagimpulsen anzubringen. Diese Techniken sind jedoch nur für den oberirdischen Einsatz ausgelegt und besitzen neben der hohen Masse und der Festlegung auf die vertikale Impulsrichtung auch Nachteile hinsichtlich der Größe und Handhabbarkeit sowie in Bezug auf die Reproduzierbarkeit der Impulssignale.

Ein generelles Problem bei der Impulserzeugung durch bewegte Massen besteht darin, daß nach Aufschlag einer bewegten Masse auf einem festen Körper ein Rückimpuls auf den Impulsgeber ausgeübt wird. Dadurch kommt es zu einem Nachschlag, der die Impulsanregung und damit auch die Auswertung der seismischen Messung verfälscht. Um diesem Problem zu begegnen, wird in DE 32 24 624 ein Impulsgeber mit bewegter Masse beschrieben, der eine hydraulische Bremse mit Fangvorrichtung für die Masse aufweist, um den Rückimpuls zu minimieren. Dieser Impulsgeber zeichnet sich jedoch durch einen komplizierten Aufbau aus, so daß eine Anwendung in der Praxis, z.B. dem untertägigen Einsatz, erschwert ist.

In der Publikation "A Vacuum Hammer Seismic Source for Underground Use" von R.D. Caroll in "Int. J. Rock Mech. Min. Sci & Geomech. Abstr.", Bd. 30, Nr. 5, 1993, S. 559 ff, wird ein Gerät beschrieben, bei dem durch den wechselweisen Einsatz von Druckluft bzw. Unterdruck eine Masse vertikal bewegt wird, um in einem Untergrund Impulssignale zu erzeugen. Der Nachteil dieses Gerätes besteht darin, daß es unhandlich ist und nur eine Arbeitsrichtung ermöglicht.

Aus der US 4 569 412 ist eine Seismikquelle für Bohrlöcher bekannt, wobei vorgeschlagen wird, dass zwei zur Schwingungsanregung eingesetzte Kolben in dem Bohrloch gegeneinander vorgespannt werden und durch einen in einer Flüssigkeit hervorgerufenen Impuls mit einer Kraft zur Anregung einer seismischen Quelle beaufschlagt werden.

Die Aufgabe der Erfindung ist es, eine verbesserte Vorrichtung zur Erzeugung mechanischer Schwingungen anzugeben, mit der die genannten Nachteile herkömmlicher Techniken ausgeschlossen oder vermindert werden und die insbesondere dazu geeignet ist, in festen Körpern reproduzierbare Impulssignale mit beliebig einstellbaren Impulsrichtungen zu erzeugen, die einen einfachen Aufbau besitzt und im untertägigen Einsatz handhabbar ist, bei der Störsignale durch Rückimpulse minimiert sind und die mit vorhandenen Maschinen und Anlagen insbesondere der Tunnelbautechnik kompatibel ist. Die Aufgabe der Erfindung ist es ferner, Verfahren zur Schwingungserzeugung unter Verwendung einer derart verbesserten Vorrichtung anzugeben.

Diese Aufgaben werden durch eine Vorrichtung bzw. Verfahren mit den Merkmalen gemäß den Patentansprüchen 1 bzw. 7 gelöst. Vorteilhafte Ausführungsformen und Anwendungen der Erfindung ergeben sich aus den abhängigen Ansprüchen.

Die Erfindung basiert auf der Idee, ausgehend von der herkömmlichen Impulserzeugung mit bewegten Massen bei einer Vorrichtung zur Erzeugung mechanischer Schwingungen mit einer in einem Führungsgehäuse bewegten Schlagmasse das Führungsgehäuse gegenüber dem jeweiligen Körper, der der Schwingungserzeugung unterzogen werden soll, mit einer pneumatischen Vorspanneinrichtung unter Ausübung einer vorbestimmten Kraft zu fixieren. Die Vorspanneinrichtung liefert die Lösung für mehrere Probleme der herkömmlichen Techniken. Erstens kann die Erzeugung unerwünschter Signalformen durch den Rückimpuls oder Rückprall der Schlagmasse vermieden werden. Die pneumatische Vorspanneinrichtung absorbiert den Rückimpuls. Desweiteren kann mit der Vorspanneinrichtung die Ausrichtung des Führungsgehäuses relativ zum Körper vor der Impulserzeugung genau eingestellt werden. Die Impulsrichtung ist beliebig wählbar. Schließlich verleiht die Vorspanneinrichtung der erfindungsgemäßen Vorrichtung zur Erzeugung mechanischer Schwingungen einen gegenüber herkömmlichen Geräten mit Fangvorrichtungen zur Reduzierung von Rückimpulsen einen erheblich vereinfachten Aufbau.

Gemäß einem weiteren wichtigen Gesichtspunkt der Erfindung wird die Schlagmasse mit einer Antriebseinrichtung bewegt, mit der die Energie der Impulserzeugung in reproduzierbarer Weise einstellbar ist. Hierzu ist ein anwendungsabhängig betätigbarer Positionssensor vorgesehen, mit dem die Laufstrecke der Schlagmasse zwischen einer Rückzugsposition und einer Schlagposition einstellbar ist. Zum Vortrieb der Schlagmasse ist die Antriebseinrichtung mit einem pneumatischen Druckzylinder (Luftdruckzylinder) ausgestattet. Durch Einstellung der Rückzugsposition der Schlagmasse kann neben der Laufstrecke auch der Druck im Druckzylinder und somit zusätzlich die Energie des auf den Körper übertragenen mechanischen Impulses eingestellt werden.

Gegenstand der Erfindung ist auch ein Verfahren zur Erzeugung mechanischer Schwingungen unter Verwendung der erfindungsgemäßen Vorrichtung, bei dem diese zunächst in einer bestimmten Position und Ausrichtung relativ zum jeweiligen Körper positioniert und mit der Vorspanneinrichtung fixiert wird. Anschließend erfolgt die Bewegung der Schlagmasse in eine bestimmte Rückzugsposition. In dieser Rückzugsposition wird die Schlagmasse festgehalten, bis der gewünschte Arbeitsdruck im Druckzylinder aufgebaut ist. Nach Freigabe der Schlagmasse in der Rückzugsposition bewegt sich die Schlagmasse vor in eine Schlagposition, in der sie auf eine Auflage zur Impuls- oder Kraftübertragung von der Schlagmasse auf den Körper trifft.

Die erfindungsgemäße Vorrichtung ist insbesondere zur Erzeugung impulsartiger Schwingungen in harten Untergründen oder in Bauwerken (insbesondere Großbauwerke wie Brücken, Staumauern oder dergleichen) ausgelegt. Die erfindungsgemäße Vorrichtung bildet vorzugsweise einen Schwingungsgenerator zur Erzeugung seismischer Schwingungen in felsartigen Gesteinen in tiefer liegenden Schichten der Erdkruste für Forschungs- und Erkundungszwecke, insbesondere beim Gebirgstunnelbau.

Die Erfindung besitzt die folgenden Vorteile. Mit der erfindungsgemäßen Schwingungserzeugung wird in optimaler Weise der systemimmanente Widerspruch zwischen dem Bedarf nach möglichst hohen Energien und großen Schlagimpulsen, die auf möglichst kleinem Raum in den Untergrund eingetragen werden sollen, einerseits und dem Bestreben nach Vermeidung von Veränderungen des Grundmaterials wegen der Stapelbarkeit und Reproduzierbarkeit des Impulssignals andererseits gelöst. Das Gerät ist von seinen Abmessungen sowohl für den untertägigen Einsatz geeignet als auch manuell handhabbar. Die erfindungsgemäße Vorrichtung besitzt einen weiten Einsatzbereich sowohl bei untertägigen Untersuchungen im Tunnelbau als auch in der oberirdischen Bautechnik. Gegenüber den herkömmlichen Techniken wird die Reproduzierbarkeit der Signalerzeugung durch Einstellung des Schlagweges und/oder der Schlagenergie erheblich verbessert.

Weitere Vorteile und Einzelheiten der Erfindung werden im folgenden unter Bezug auf die beigefügten Zeichnungen beschrieben. Es zeigen:
- Figur 1:: eine Schnittdarstellung des Führungsgehäuses eines erfindungsgemäßen Schwingungsgenerators,
- Figur 2:: eine vergrößerte Schnittdarstellung des Schlaggkopfes des Generators gemäß Figur 1,
- Figur 3:: eine schematische Darstellung einer Tunnelbohrmaschine, die zum Einsatz mit einem erfindungsgemäßen Schwingungsgenerator ausgelegt ist, und
- Figur 4:: eine schematische Gesamtdarstellung eines erfindungsgemäßen Schwingungsgenerators auf einer separaten Halterung beim mobilen untertägigen Einsatz.

Die Erfindung wird im folgenden unter Bezug auf eine bevorzugte Ausführungsform eines Schwingungserzeugers oder -generators für seismische Erkundungen beschrieben, ist jedoch in entsprechender Weise bei der Gestaltung anderer Vorrichtungen zur Erzeugung mechanischer Schwingungen in der Seismik und/oder der Bautechnik anwendbar. In der folgenden Beschreibung werden lediglich die erfindungswesentlichen Komponenten erläutert. Einzelheiten von pneumatischen Zylindern und zugehörigen Überoder Unterdruckleitungen sind an sich bekannt und werden daher hier nicht mehr beschrieben.

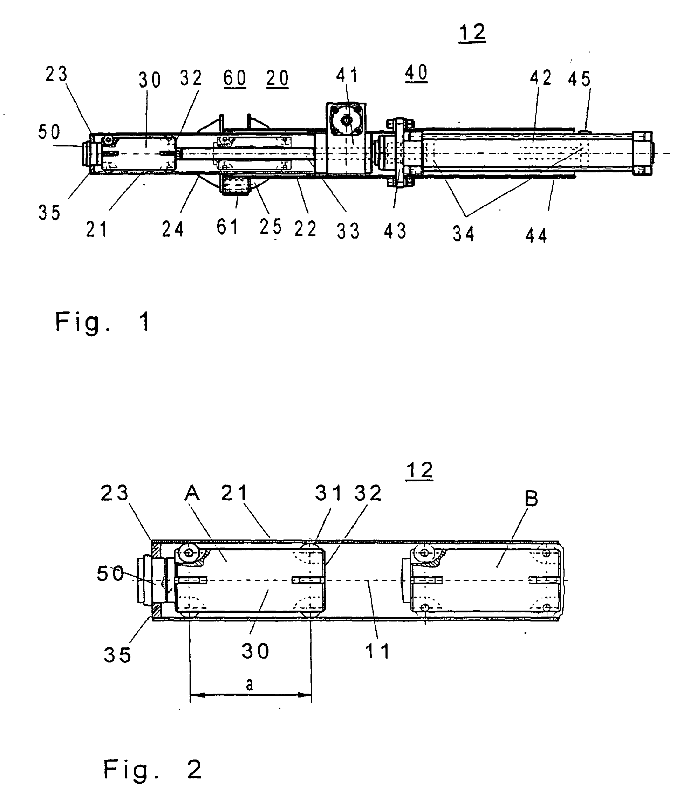

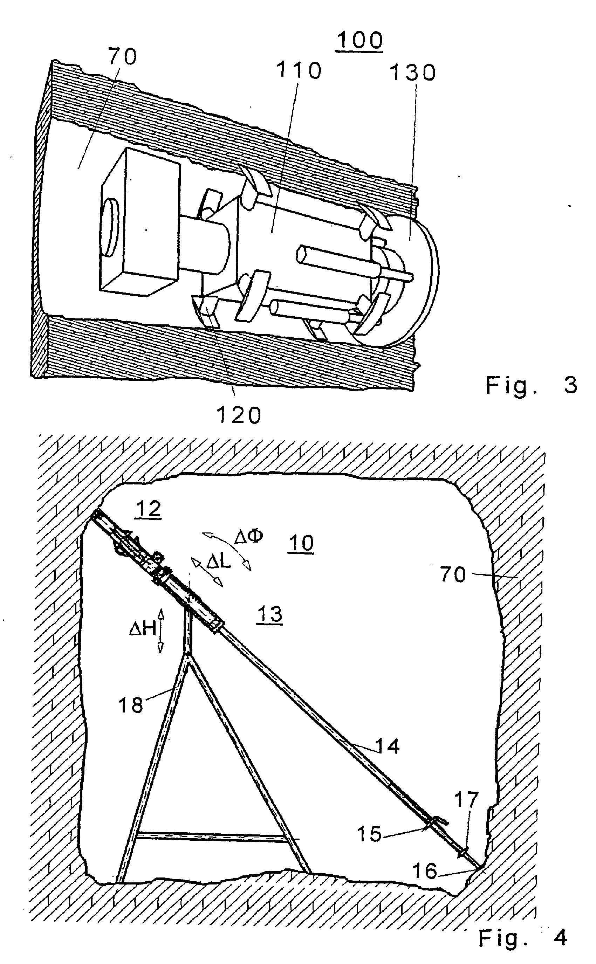

Die Figuren 1 und 2 zeigen den Aufbau eines erfindungsgemäßen Schwingungsgenerators, der allgemein an seiner Vorderseite, die im Betriebszustand zum Gestein hinweist, einen Impulsgeberbereich 12 (in den Figuren 1 und 2 gezeigt) und auf seiner entgegengesetzten Seite einen Haltebereich 13 zur Anbringung in einem Großgerät (siehe Figur 3) oder zur anderweitigen Fixierung im Untergrund (siehe Figur 4) aufweist. Im Impulsgeberbereich 12 wird durch ein Führungsrohr 20 ein Führungsgehäuse zur Führung der Schlagmasse 30 und zur Anbringung einer Antriebseinrichtung 40 für die Schlagmasse 30 gebildet. Das Führungsrohr 20 ist zweiteilig ausgebildet. Es besteht aus einem Innenrohr 21, in dem die Schlagmasse 30 beweglich ist, und einem Außenrohr 22, in bzw. an dessen Ende Komponenten der Antriebseinrichtung 40 angebracht sind. Die Innen- und Außenrohre 21, 22 sind formschlüssig ineinandergesteckt und relativ zueinander in axialer Richtung beweglich.

Im Innenrohr 21 ist die Schlagmasse 30 zwischen der Schlagposition A und der Rückzugsposition B (siehe Figur 2) beweglich. Die Schlagmasse 30 wird im Innenrohr 21 durch Führungsrollen 31 zentriert. Es sind vorzugsweise an jedem Ende der Schlagmasse 30 je vier, kreuzweise angeordnete Führungsrollen 31 vorgesehen, die zwei Gruppen mit einem Abstand a bilden. Es sind aber auch andere Anordnungen mit weniger Rollen 31 realisierbar. Am rückseitigen Ende 32 der Schlagmasse 30 befindet sich eine Kolbenstange 33 mit einem Kolben 34. Die Kolbenstange 33 besitzt eine derartige Länge, daß der Kolben 34 in den Druckzylinder 42 (siehe unten) ragt und in diesem beweglich ist. In Figur 2 ist die Kolbenstange 33 aus Übersichtlichkeitsgründen nicht dargestellt. Am vorderen Ende der Schlagmasse 30 befindet sich ein Schlagstück 35.

Am vorderen Ende des Innenrohres 21 befindet sich eine Endplatte 23, die die Auflage 50 trägt. Die Auflage 50 ist in der Endplatte 23 in Richtung der Achse 11 kraftschlüssig und in allen anderen Richtungen formschlüssig angeordnet.

Bei einem seismischen Schwingungsgenerator 10 sind beispielsweise die folgenden Maße gegeben. Die Masse der Schlagmasse beträgt rund 5 kg. Der Abstand a (siehe Figur 2) beträgt rund 13 cm. Der Durchmesser des Kolbens 34 beträgt rund 8 cm. Der Druckzylinder 42 ist für einen Gesamthub von 40 cm bei einem Arbeitshub von 25 cm ausgelegt.

Das Innenrohr 21 bzw. das Außenrohr 22 besitzen jeweils seitliche Auskragungen 24, 25, zwischen denen entlang des Umfangs des Außenrohrs 22 gleichmäßig verteilt mehrere Vorspannzylinder 61 befestigt sind. Obwohl es an sich genügt, wenn lediglich ein Vorspannzylinder 61 angebracht ist, werden mehrere Vorspannzylinder, mindestens drei, bevorzugt. Durch Betätigung der Vorspannzylinder 61, die auch als Anpresszylinder bezeichnet werden, können das Innen- und Außenrohr 21, 22 relativ zueinander teleskopartig verschoben werden. Wenn sich der Schwingungsgenerator 10 in Betriebsposition verankert relativ zur bearbeitenden Oberfläche befindet, wird, nachdem die Auflage 50 auf das Gestein in gewünschter Weise aufgesetzt worden ist, jeder Vorspannzylinder 61 mit Druckluft gefüllt, bis die Auflage 50 federnd, gedämpft und mit einer vorbestimmten Vorspannkraft auf dem Gestein (z.B. Gestein 70 in Figur 4) aufliegt.

Am rückseitigen Ende des Außenrohres 22 ist die Antriebseinheit 40 für die Schlagmasse 30 vorgesehen. Die Antriebseinheit 40 umfaßt eine Feststelleinheit 41 und den Druckzylinder 42. Gemäß einer bevorzugten Ausführungsform der Erfindung ist die Feststelleinheit 41 am Druckzylinder 42 befestigt, der gesondert an das Außenrohr mit der Flanschverbindung 43 angeflanscht ist. Es kann auch zusätzlich ein äußeres Schutz- oder Halterohr 44 für den Druckzylinder 42 vorgesehen sein.

Die Feststelleinheit 41 ist eine pneumatisch betriebene Klemmeinrichtung. In der Feststelleinheit 41 befinden sich unter Federkraft an der Kolbenstange 33 anliegende Klemmbacken, die bei Beaufschlagung der Feststelleinheit 41 mit einem Arbeitsdruck pneumatisch voneinander getrennt werden, so daß die Kolbenstange 33 axial frei beweglich ist. Somit ist die Feststelleinheit 41 zwischen zwei Zuständen umschaltbar. Im entlüfteten Zustand ist die Haltestellung gegeben, in der die Klemmbacken (nicht dargestellt) die Kolbenstange 33 festhalten. Im druckbeaufschlagten Zustand ist die Freigabestellung gegeben, in der die Kolbenstange mit der Schlagmasse 30 je nach Unter- oder Überdruck im Druckzylinder 42 von der Schlagposition A in die Rückzugsposition B oder umgekehrt bewegt wird.

Das Bezugszeichen 45 bezeichnet einen kontaktlosen Positionssensor, der dazu ausgelegt ist, die Bewegung des Kolbens 34 im Druckzylinder 42 zur axialen Position des Sensors zu erfassen. Der Positionssensor 45 ist vorzugsweise ein Magnetschalter, der mit einem in den Kolben 34 eingelegten Ringmagneten zusammenwirkt. Damit wird durch den Kolben die Feststelleinheit 41 direkt geschaltet. Auf der Grundlage des Signals des Positionssensors 45 wird die Feststelleinheit 41 geschaltet. Der Positionssensor 45 ist axial verschiebbar angeordnet, so daß verschiedene Rückzugspositionen (B) der Schlagmasse 30 eingestellt werden können. Bei einer Einstellung am vorderen Ende des Druckzylinders 42, d.h. auf der Seite des Führungsgehäuses, ergibt sich ein kleiner Arbeitshub der Schlagmasse 30 und damit eine geringe Schlagenergie. Bei einer Einstellung weiter hinten hingegen wird der Arbeitshub und damit die Energie der Schlagmasse 30 vergrößert.

Der Schwingungsgenerator 10 wird entsprechend dem folgenden Arbeitsablauf betrieben. Zunächst wird der Schlagkopf bzw. das Führungsgehäuse 20 im Bereich seines Schwerpunktes an einem Großgerät, einer Verankerungseinrichtung oder einer separaten Halterung so befestigt, daß er manuell auf den gewünschten Ort im Gestein eingestellt werden kann. Alternativ kann diese Einstellung auch automatisch erfolgen. Anschließend werden die Vorspannzylinder 61 mit einem Überdruck beaufschlagt, so daß sich das Innenrohr 21 hin zum Gestein aus dem Außenrohr 22 herausschiebt. Anwendungsabhängig wird eine vorbestimmte Vorspannkraft (z.B. 1500 N), mit der die Auflage 50 auf dem Gestein aufliegt, eingestellt. Daraufhin wird die Schlagmasse 30 von der Schlagposition A, in der sie sich auch im Ruhezustand befindet, in die Rückzugsposition B zurückgezogen, ggf. nachdem der Positonssensor 45 an der gewünschten Position eingestellt worden ist. Sobald der Kolben 34 die Position des Positionssensors 45 erreicht hat, wird die Feststelleinheit 41 entlüftet, so daß die Klemmbacken die Kolbenstange 33 festhalten.

Daraufhin wird der Druckzylinder 42 mit Druckluft beaufschlagt. Der Maximaldruck wird, wie auch die Stellung des Positionssensors 45, mit Blick auf die gewünschte Schlagenergie eingestellt. Der Maximaldruck beträgt beispielsweise rund 0,8 MPa. Sobald der erforderliche Druck im Druckzylinder erreicht ist, wird der Pneumatikzylinder in der Feststelleinheit 41 gelüftet und damit eine Freigabe der Klemmbacken ausgelöst. Daraufhin wird der Kolben und mit diesem die Schlagmasse 30 mit hoher Geschwindigkeit in die Schlagposition A beschleunigt. In der Position A überträgt die Schlagmasse 30 über das Schlagstück 35 und die Auflage 50 ihre Energie auf den anzuregenden Untergrund. Ein eventuell im Untergrund entstehender Rückimpuls wird mit entgegengesetzter Richtung über die Auflage 50 auf das Innenrohr 21 und die Vorspannzylinder 61 übertragen, wo der Rückimpuls absorbiert wird.

In Figur 3 ist schematisch eine Tunnelbohrmaschine (TBM) 100 illustriert, mit der die erfindungsgemäße Vorrichtung zur Erzeugung mechanischer Schwingungen mit Vorteil verwendet werden kann. Die Tunnelbohrmaschine 100 bohrt im Felsgestein 70. Ein Trägerteil 110 der Tunnelbohrmaschine ist mit seitlichen Abstützungen 120 gegenüber dem Felsgestein 70 abgestützt. Die eigentliche Bohrung findet am Bohrkopf 130 statt. Je nach Art der seismischen Untersuchungen, z.B. zur seitlichen Erkundung oder zur Vorauserkundung, und je nach Bautyp der TBM 100 ist erfindungsgemäß vorgesehen, mindestens einen Schwingungsgenerator unmittelbar am Bohrkopf 130 (Schild) hinter diesem oder an einer der Abstützungen 120 anzubringen.

Die manuelle Handhabung eines erfindungsgemäßen Schwingungsgenerators 10 ist in Figur 4 illustriert. Der Schwingungsgenerator 10 ist in einem Hohlraum im Gebirge, z.B. in einem durch das Gebirgsgestein 70 verlaufenden Tunnel aufgebaut. Das Führungsrohr 22 mit der Antriebseinrichtung 40 ist im Bereich des Systemschwerpunktes so an einem separaten Stativ 18 oder einer Lafette befestigt, daß er sowohl geschwenkt (Δφ) als auch in seiner Längsposition (ΔL) und seiner Höhenposition (ΔH) veränderlich ist. Anschließend wird der Haltebereich 13 in zwei Schritten an die manuell eingestellte Position angepaßt. Bei einem ersten Schritt erfolgt eine Grobeinstellung der stufenlos einstellbaren Stütze 14 auf die erforderliche Länge mittels Lochteilung und Verriegelung und Verriegelungsbolzen 15. Anschließend wird das Widerlager 16 über ein Gewinde und die Stellmutter 17 festgelegt. Danach erfolgt das Vorspannen des Schwingungsgenerators 10 und das Auslösen, wie es oben beschrieben wurde.

## Patentansprüche

1. Vorrichtung (10) zur Erzeugung mechanischer Schwingungen in einem festen Körper (70), die ein Führungsgehäuse (20) aufweist, in dem eine Schlagmasse (30) mit einer Antriebseinrichtung (40) zwischen einer Schlagposition (A) und einer Rückzugsposition (B) beweglich ist und das eine Auflage (50) zur Kraftübertragung von der Schlagmasse (30) in der Schlagposition (A) zu dem Körper (70) besitzt, wobei eine Vorspanneinrichtung (60) vorgesehen ist, die mindestens einen pneumatischen Vorspannzylinder (61) aufweist, mit dem die Auflage (50) mit einer vorbestimmten Vorspannung am Körper aufsetzbar ist, wobei das Führungsgehäuse ein gerades Führungsrohr (20) umfaßt, an dessen Vorderende die Auflage (50) gebildet und an dessen Rückende die Antriebseinrichtung (40) vorgesehen ist, **dadurch gekennzeichnet, dass** das Führungsrohr (20) aus einem Innenrohr (21) und einem Außenrohr (22) besteht, die mit dem Vorspannzylinder (61) relativ zueinander teleskopartig axial verschiebbar sind.

2. Vorrichtung gemäß Anspruch 1, bei der die Schlagmasse (30) im Innenrohr (21) auf Führungsrollen (31) beweglich ist und auf der Rückseite eine Kolbenstange (33) mit einem Kolben (34) aufweist.

3. Vorrichtung gemäß Anspruch 1, bei der die Antriebseinrichtung (40) eine Feststelleinheit (41) zur Fixierung der Schlagmasse (30) in der Rückzugsposition (B) und einen am Ende des Außenrohres (22) befestigten Druckzylinder (42) aufweist, in dem der Kolben (34) der Schlagmasse (30) beweglich ist.

4. Vorrichtung gemäß Anspruch 3, bei der am Druckzylinder (42) ein Positionssensor (45) zur Erfassung der axialen Position des Kolbens (34) angebracht ist.

5. Vorrichtung gemäß einem der vorhergehenden Ansprüche, bei der am Druckzylinder (42) ein Haltebereich (13) zur Verankerung der Vorrichtung (10) relativ zum zu behandelnden Körper (70) vorgesehen ist.

6. Vorrichtung gemäß einem der vorhergehenden Ansprüche, die in eine Tunnelbohrmaschine (100) integriert ist.

7. Verfahren zur Erzeugung mechanischer Schwingungen in einem festen Körper (70) mit einer Vorrichtung (10) gemäß einem der Ansprüche 1 bis 6, mit den Schritten:
- Positionieren des Führungsgehäuses (20), so daß die Auflage (50) auf den Körper (70) an einer vorbestimmten Stelle aufgesetzt wird,
- Vorspannen der Auflage (50) relativ zum Körper (70) durch Betätigen des mindestens einen Vorspannzylinders (61),
- Rückzug und Festklemmen der Schlagmasse (30) in der Rückzugsposition (B),
- Druckaufbau in der Antriebseinrichtung (40) und Freigabe der Schlagmasse (30), so daß sich diese in die Schlagposition (A) bewegt.

8. Verfahren gemäß Anspruch 7, bei dem die Rückzugsposition der Schlagmasse (30) unter Erfassung der Position des mit der Schlagmasse (30) verbundenen Kolbens (34) im Druckzylinder (42) der Antriebseinrichtung (40) mit einem Positionssensor (45) eingestellt wird.

9. Verfahren gemäß Anspruch 7 oder 8, bei dem die Schwingungserzeugung im Gebirgsgestein eines Gebirgstunnels erfolgt.

10. Verwendung einer Vorrichtung oder eines Verfahrens gemäß einem der vorhergehenden Ansprüche zur seismischen Untersuchung oder Erkundung von Gebirgsgestein, zur Erzeugung von mechanischen Schwingungen in festem Gestein oder in Bauwerken oder für Bodenuntersuchungen.

## Claims

1. An apparatus (10) for generating mechanical vibrations in a solid body (70), which includes a guide housing (20) in which a striking mass (30) with a drive device (40) can move between a striking position (A) and a retracted position (B) and which has a support (50) for transmitting force from the striking mass (30) in the striking position (A) to the body (70), a pretensioning device (60) being provided which includes at least one pneumatic pretensioning cylinder (61), by means of which the support (50) can be placed on the body with a predetermined pretension, the guide housing comprising a straight guide tube (20), at the front end of which the support (50) is formed and at the rear end of which the drive device (40) is provided, **characterized in that** the guide tube (20) consists of an inner tube (21) and an outer tube (22) which can be displaced axially relative to one another in a telescopic manner by means of the pretensioning cylinder (61).

2. The apparatus according to claim 1, in which the striking mass (30) can move in the inner tube (21) on guide rollers (31) and has on the rear side a piston rod (33) with a piston (34).

3. The apparatus according to claim 1, in which the drive device (40) has a fixing unit (41) for fixing the striking mass (30) in the retracted position (B), and a pressure cylinder (42) which is attached to the end of the outer tube (22) and in which the piston (34) of the striking mass (30) can move.

4. The apparatus according to claim 3, in which a position sensor (45) for detecting the axial position of the piston (34) is fitted on the pressure cylinder (42).

5. The apparatus according to any one of the preceding claims, in which a holding region (13) for anchoring the apparatus (10) relative to the body (70) to be treated is provided on the pressure cylinder (42).

6. The apparatus according to any one of the preceding claims, which is integrated in a tunnel boring machine (100).

7. A method for generating mechanical vibrations in a solid body (70) using an apparatus (10) according to any one of claims 1 to 6, comprising the steps:
- positioning the guide housing (20) so that the support (50) is placed onto the body (70) at a predetermined location,
- pretensioning the support (50) relative to the body (70) by actuating the at least one pretensioning cylinder (61),
- retracting and fixing the striking mass (30) in the retracted position (B),
- building up pressure in the drive device (40) and releasing the striking mass (30) so that it moves into the striking position (A).

8. The method according to claim 7, in which the retracted position of the striking mass (30) is set by detecting the position of the piston (34), connected to the striking mass (30), in the pressure cylinder (42) of the drive device (40) by means of a position sensor (45).

9. The method according to claim 7 or 8, in which the vibration generation takes place in the mountain rock of a mountain tunnel.

10. The use of an apparatus or of a method according to any one of the preceding claims for the seismic analysis or investigation of mountain rock, for generating mechanical vibrations in solid rock or in buildings or for ground surveys.

## Revendications

1. Dispositif (10) destiné à générer des vibrations mécaniques dans un corps (70) fixe, lequel dispositif comporte un carter de guidage (20), dans lequel une masse de frappe (30) est mobile au moyen d'un dispositif d'entraînement (40) entre une position de frappe (A) et une position en retrait (B) et lequel comporte un support (50) pour la transmission de la force depuis la masse de frappe (30) dans la position de frappe (A) sur le corps (70), sachant qu'il est prévu un dispositif de précontrainte (60), qui comporte au moins un cylindre de précontrainte (61) pneumatique, par lequel le support (50) peut être posé avec une précontrainte prédéterminée sur le corps, le carter de guidage comportant un tube de guidage (20) droit, sur l'extrémité avant duquel est formé le support (50) et sur l'extrémité arrière duquel est prévu le dispositif d'entraînement (40), **caractérisé en ce que** le tube de guidage (20) est formé par un tube intérieur (21) et un tube extérieur (22), qui, au moyen du vérin de précontrainte (61), sont aptes à coulisser axialement l'un par rapport à l'autre de manière télescopique.

2. Dispositif selon la revendication 1, dans lequel la masse de frappe (30) est mobile dans le tube intérieur (21) sur des galets de guidage (31) et comporte sur la face arrière une tige de piston (33) avec un piston (34).

3. Dispositif selon la revendication 1, dans lequel le dispositif d'entraînement (40) comporte une unité d'immobilisation (41) pour immobiliser la masse de frappe (30) dans la position en retrait (B) et un cylindre de pression (42), qui est fixé à l'extrémité du tube extérieur (22) et dans lequel se déplace le piston (34) de la masse de frappe (30).

4. Dispositif selon la revendication 3, dans lequel un capteur de position (45), destiné à détecter la position axiale du piston (34), est monté sur le cylindre de pression (42).

5. Dispositif selon l'une quelconque des revendications précédentes, dans lequel une zone de fixation (13), destinée à la fixation du dispositif (10) par rapport au corps (70) à manoeuvrer, est prévue sur le cylindre de pression (42).

6. Dispositif selon l'une quelconque des revendications précédentes, lequel est intégré dans un tunnelier (100).

7. Procédé destiné à générer des vibrations mécaniques dans un corps (70) fixe avec un dispositif (10) selon l'une quelconque des revendications 1 à 6, comportant les étapes suivantes :
- positionnement du carter de guidage (20), de telle sorte que le support (50) est posé sur le corps (70) à un emplacement prédéterminé,
- précontrainte du support (50) par rapport au corps (70) sous l'effet de l'actionnement dudit au moins un cylindre de précontrainte (61),
- rappel et blocage de la masse de frappe (30) dans la position en retrait (B),
- production de pression dans le dispositif d'entraînement (40) et déblocage de la masse de frappe (30), de telle sorte que celle-ci se déplace dans la position de frappe (A).

8. Procédé selon la revendication 7, dans lequel la position en retrait de la masse de frappe (30) est ajustée au moyen d'un capteur de position (45) par la détection de la position du piston (34), relié à la masse de frappe (30), dans le cylindre de pression (42) du dispositif d'entraînement (40).

9. Procédé selon la revendication 7 ou 8, dans lequel les vibrations sont générées dans la roche d'un tunnel creusé dans la roche.

10. Utilisation d'un dispositif ou d'un procédé selon l'une quelconque des revendications précédentes pour l'examen ou la reconnaissance sismique d'une roche montagneuse, pour la production de vibrations mécaniques dans une roche fixe ou dans des ouvrages ou pour les sondages du sol.
